# Europäisches Patentamt

# European Patent Office

# Office européen des brevets

(19)

(11) Numéro de publication: **0 133 398**
**B1**

(12) **FASCICULE DE BREVET EUROPEEN**

(45) Date de publication du fascicule du brevet:
**09.03.88**

(51) Int. Cl.⁴: **F 16 F 9/48**

(21) Numéro de dépôt: **84401533.9**

(22) Date de dépôt: **20.07.84**

(54) **Dissipateur hydraulique d'énergie à taux multiples.**

(30) Priorité: **20.07.83 FR 8311941**

(43) Date de publication de la demande:
**20.02.85 Bulletin 85/8**

(45) Mention de la délivrance du brevet:
**09.03.88 Bulletin 88/10**

(84) Etats contractants désignés:
**BE DE FR GB IT NL**

(56) Documents cités:
**FR - A - 724 772**
**FR - A - 2 079 874**
**FR - A - 2 305 645**
**US - A - 2 224 306**
**US - A - 3 461 991**
**US - A - 4 095 682**

(73) Titulaire: **SOCIETE M T E Société anonyme, 32, Quai de Dion Bouton, F-92800 Puteaux (FR)**

(72) Inventeur: **Katz, Maurice, 71 rue Raynouard, F-75016 Paris (FR)**

(74) Mandataire: **Weinmiller, Jürgen et al, Lennéstrasse 9 Postfach 24, D-8133 Feldafing (DE)**

ACTORUM AG

## Description

La présente invention se rapporte à un dissipateur hydraulique d'énergie à taux de travail multiples, du type télescopique.

Ce genre de dissipateur hydraulique d'énergie à taux de travail multiples est plus particulièrement destiné au freinage des mouvements de lacet des bogies de matériels roulants de chemins de fer, mais peut également s'appliquer à des suspensions de véhicules dont les charges varient dans de très larges limites, ainsi qu'à des vérins-amortisseurs de commandes qui doivent agir de façon différente sur diverses parties de leurs courses.

Le brevet FR-A 2 079 874 décrit un amortisseur comprenant un cylindre de travail rempli de liquide et partagé en deux chambres par un piston muni de deux ensembles de clapets, chaque ensemble contrôlant le passage du fluide d'une chambre à une autre et un élément, fixé sur le fond du cylindre de travail, pénétrant à travers un alésage prévu sur le fond du piston, dans une chambre prévue à l'intérieur de la tige du piston. Cet amortisseur a pour but d'améliorer la suspension en étant inactif lorsque la suspension s'écarte de sa position d'équilibre et actif lorsqu'elle revient à sa position d'équilibre. Ce fonctionnement séquentiel est obtenu grâce à des gorges pratiquées dans l'élément, leur profil étant convenablement choisi à cet effet.

Ce type d'amortisseur ne convient pas pour le freinage des mouvements de lacets d'un bogie.

On sait, en effet, que les mouvements de lacet d'un bogie, consistant en une rotation lente de part et d'autre, autour de son pivot sur lequel vient s'articuler la caisse, nécessitent un freinage important en ligne droite et un freinage beaucoup moins important en courbe. Le freinage de ce type de mouvements doit donc être effectué par un amortisseur dont le fonctionnement dépend de l'amplitude du déplacement du bogie par rapport à sa position d'équilibre et non du sens du déplacement comme l'amortisseur décrit dans le brevet FR-A 2 079 874.

Le brevet US-A 4 095 682 décrit un amortisseur hydraulique pour suspension de véhicules automobiles qui comporte, outre les caractéristiques de l'amortisseur du brevet FR-A 2 079 874 mentionnées ci-dessus, une chambre annulaire de compensation entourant le cylindre de travail et communiquant avec la chambre de travail opposée à la tige du piston.

L'élément fixé sur le fond du cylindre de travail consiste en une tige de section variable, comprenant une portion centrale de section faible, deux portions extrêmes de section plus importante aux deux extrémités de la tige et deux portions reliant la portion centrale aux portions extrêmes et dont la section varie continûment.

Cet amortisseur permet d'augmenter la résistance hydraulique quand l'amplitude de la course du piston augmente.

Ce brevet ne convient donc pas pour le freinage des mouvements de lacet d'un bogie qui nécessite un freinage important en ligne droite et un freinage beaucoup moins important en courbe.

D'autre part, dans le dispositif, la résistance hydraulique est modulée par la variation de la section de passage du liquide. Ceci présente un grave inconvénient dans le cas de mouvement à très faible vitesse. En effet, la résistance hydraulique est extrêmement faible au voisinage de la position d'équilibre.

L'objet de la présente invention est donc d'obtenir, dans les deux sens des mouvements et indépendamment de la vitesse, un taux de freinage hydraulique différent selon l'amplitude du déplacement du bogie par rapport à sa position d'équilibre, en particulier un taux de freinage important pour de faibles amplitudes de déplacement et plus faible pour d'importantes amplitudes de déplacement.

Selon l'invention, chaque ensemble de clapets comprend au moins un clapet fortement chargé par un ressort taré et un clapet faiblement chargé par un autre ressort taré. De plus, l'organe comprend des portions dont la section est, soit égale à celle de l'alésage, soit inférieure à celle de l'alésage, l'organe provoquant suivant sa position par rapport au piston, l'obturation totale ou l'ouverture totale de l'alésage. Ainsi, le passage du fluide s'effectue par un clapet fortement chargé quand le piston se déplace le long d'une portion de l'organe centrée sur la position d'équilibre du piston et dont la section est égale à celle de l'alésage, un taux de freinage élevé étant alors obtenu, ou par un clapet faiblement chargé quand le piston se déplace le long d'une portion de l'organe ayant une section inférieure à celle de l'alésage, un taux de freinage faible étant alors obtenu.

L'invention sera mieux comprise à l'aide de la description suivante se rapportant à des modes de réalisation particuliers donnés à titre d'exemples et en se référant aux dessins annexés qui représentent:

Fig. 1 une vue en coupe axiale d'un dissipateur hydraulique d'énergie à deux taux d'amortissement, dans les deux sens de mouvements, conforme à l'invention,

Fig. 2 une vue en coupe selon I–I de la figure 1,

Fig. 3 une vue en coupe axiale partielle à plus grande échelle selon II–II de la figure 2,

Fig. 4 une coupe axiale partielle d'une variante de réalisation de l'invention,

Fig. 5 une section transversale partielle d'une autre variante de réalisation de l'invention.

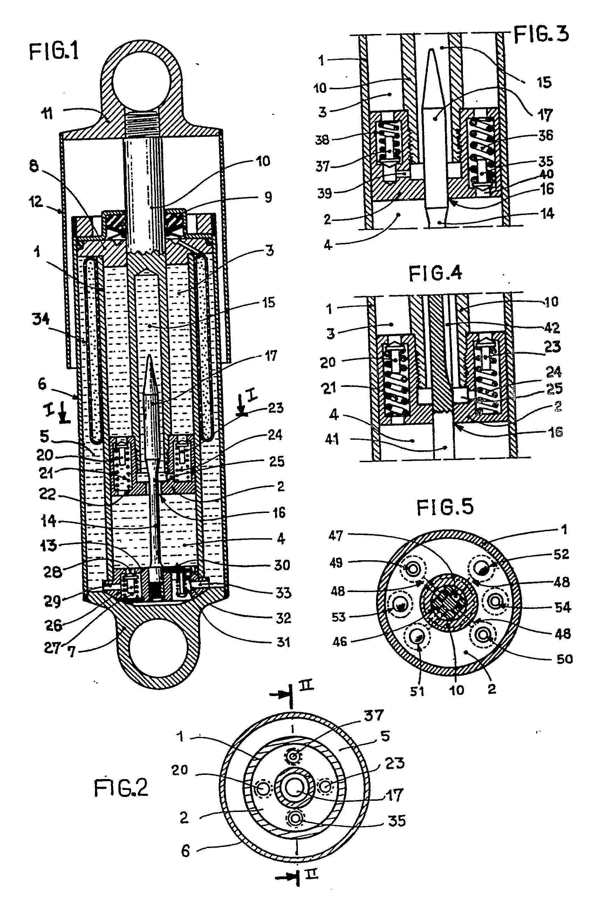

En se reportant tout d'abord à la figure 1, le dissipateur hydraulique d'énergie à deux taux de freinage dans les deux sens, comporte un cylindre de travail 1, divisé par un piston 2 en deux chambres 3 et 4 et entouré d'un tube extérieur 6, formant avec lui une chambre annulaire de compensation 5. Une enveloppe élastique 34 remplie de gaz comprimé sous faible pression, est placée à l'intérieur de la chambre annulaire de compensation 5. Le tube extérieur 6 est obturé à sa partie inférieure par une attache 7, et, à sa partie supérieure, par un contre-piston 8 portant un joint d'étanchéité 9.

Une embase 13, reposant sur l'attache 7 et fermant la chambre 4 comporte un clapet 26 chargé par un ressort taré 27, permettant au liquide, à partir d'une certaine pression déterminée, de passer de la chambre 4 vers la chambre de compensation 5, à travers les orifices 28 et 29. Une valve 30, maintenue en position de fermeture par un faible ressort 31, permet au liquide de passer facilement en sens inverse, c'est-à-dire de la chambre 5 vers la chambre 4 à travers les passages 32 et 33, sous l'effet de l'aspiration du piston 2 et de la poussée de l'enveloppe élastique 34, rendant ainsi possible le fonctionnement du dissipateur dans toutes les positions et notamment horizontale, correspondant par exemple aux mouvements de lacet des bogies.

Le piston 2 est fixé à l'extrémité inférieure d'une tige 10 qui traverse le contre-piston 8 et qui comporte, à son extrémité extérieure, une attache 11 et un boitier de protection 12. Dans la tige 10 est prévu une chambre interne 15 communiquant avec la chambre 4 par un alésage 16 aménagé au fond du piston 2.

L'embase 13 porte dans son centre une aiguille 14 à profil variable qui, en fonction des mouvements, pénètre plus ou moins dans la chambre 15 à travers l'alésage 16. L'aiguille 14 possède une portion centrale cylindrique 17 de section égale à celle de l'alésage de manière à boucher ce dernier le long d'une partie de la course, alors que les portions cylindriques de part et d'autre de la portion centrale 17 ont une section inférieure à celle de l'alésage 16 afin d'établir une communication libre entre les chambres 4 et 15.

Le piston 2 (figures 1, 2 et 3) est pourvu d'une part de clapets (20–33) laissant passer le fluide de la chambre 3 vers la chambre 4 au cours d'un mouvement d'extension et d'autre part de clapets (35–37) laissant passer le fluide de la chambre 4 vers la chambre 3 au cours d'un mouvement de compression. Le clapet 20 à ressort 21 taré fort ouvre directement vers la chambre 4, à travers un orifice 22, et le clapet 23 à ressort 24, plus faiblement taré, ouvre vers la chambre 15 par un passage 25. Le clapet 35 (figure 3), chargé par un ressort 36 fort permet au liquide de passer de la chambre 4 vers la chambre 3 par un orifice 40, à partir d'une pression déterminée, et le clapet 37, chargé par un ressort 38 taré plus faible met en communication les chambres 3 et 15 par un passage 39.

Le fonctionnement du dissipateur hydraulique à taux multiples est le suivant: lorsqu'un effort de traction est appliqué à l'attache 11, l'aiguille 14 se trouvant par rapport au piston dans la position représentée à la figure 1, le liquide est comprimé dans la chambre 3 jusqu'à l'ouverture du clapet 23 faiblement chargé par le ressort 25. A ce moment, le liquide passe de la chambre 3 vers la chambre 4 par le passage 25 et l'alésage 16 qui est ouvert, d'où une résistance réduite. Le mouvement de traction continuant, la portion centrale 17 de l'aiguille 14 vient obturer l'alésage 16, en empêchant ainsi le liquide de passer par le clapet 23 qui est alors neutralisé; de ce fait, le liquide de la chambre 3 monte en pression jusqu'à pouvoir ouvrir le clapet 20 plus fortement chargé par un ressort 21, d'où une résistance hydraulique accrue et un taux de freinage plus élevé. Le mouvement continuant toujours dans le même sens, l'aiguille 14 sort entièrement de l'alésage 16, ce qui a pour effet de fermer le clapet 20 et d'ouvrir de nouveau le clapet 23 plus faible; le liquide trouve ainsi un passage plus facile, par ce clapet 23, le passage 25 et l'alésage 16, de la chambre 3 vers la chambre 4, entraînant de nouveau une résistance faible.

Ensuite lors d'un mouvement de compression (figure 3), la chambre 4 s'étant entièrement remplie de liquide par la valve 30, le liquide passe d'abord par l'alésage 16, encore dégagé, par le passage 39, et le clapet 37, plus faiblement chargé, la résistance hydraulique est alors réduite. Dès que la portion centrale de l'aiguille 14 obture l'alésage 16, le liquide ne peut trouver de passage de la chambre 4 vers la chambre 3 qu'à travers le clapet 35, chargé fortement par son ressort 36, provoquant ainsi une augmentation rapide de la résistance. Le mouvement de compression se poursuivant, la portion centrale 17 de l'aiguille 14 libère l'alésage 16 et rétablit de nouveau le passage du liquide par le clapet 37, d'où une réduction de la résistance hydraulique au taux le plus faible.

Dans les deux cas, le clapet 26, chargé par le ressort 27, taré convenablement, ne laisse passer, par l'orifice 29, que le surplus du liquide, correspondant au volume de la tige 10 enfoncée, vers la chambre de compensation 5, afin d'assurer d'abord un remplissage total de la chambre 3, nécessaire pour le freinage du prochain mouvement de détente.

On obtient donc, en fonction de l'importance du mouvement de traction ou de compression exercé sur le dissipateur, une succession de taux de freinage réduit ou plus élevé.

Dans la variante selon la figure 4, le piston 2 comporte également les deux clapets 20 et 23 chargés respectivement par des ressorts tarés 21–24, disposés comme ceux de la figure 1, de manière à contrôler le passage du liquide de la chambre 3 vers la chambre 4, notamment dans le cas des mouvements d'extension. Dans le sens de la compression, le piston comporte les deux clapets chargés orientés en sens inverse, comme ceux de la figure 3, pour contrôler de la même façon, les passages du liquide de la chambre 4 vers la chambre 3. Dans ce cas, l'aiguille, à profil variable, est remplacée par une tige cylindrique 41, portant une ou plusieurs rainures 42 sur une partie de sa longueur, de manière à ouvrir ou fermer le passage du liquide le long de la course, à travers l'alésage 16 du piston 2. Le fonctionnement de cette variante est en tous points semblable à celui décrit pour la figure 1, la tige cylindrique 41 munie de rainures 42 provoquant en fonction de sa position par rapport à l'alésage 16, l'ouverture des clapets faiblement ou fortement chargés, pour obtenir un taux de freinage plus ou moins important dans le sens de la traction ou de la compression.

A la figure 5, la tige de commande est une tige carrée 46, pourvue sur chacune de ses quatre faces longitudinales, de rainures 4 disposées convenablement. Le fonctionnement consiste également à occulter ou à dégager des orifices 48, débouchant directement sur les quatre faces, pour mettre en communication les deux chambres de travail, séparées par le piston 2, successivement, soit à travers les clapets 49 et 50, moins chargés, soit encore à travers les clapets 51 et 52, les plus faiblement chargés. On obtient ainsi dans chaque sens trois taux différents de freinage. Avec une tige 46, de section hexagonale ou octogonale, on obtiendrait respectivement quatre ou cinq taux différents, etc. ...

Les clapets 53 et 54, les plus fortement chargés, et débouchant directement, peuvent être commandés également par la tige 46.

Une tige de section ronde, garnie de nombreuses rainures dans le sens de sa longueur sur des portions de course choisies, peut également remplacer une tige polygonale, à condition d'être immobilisée en rotation par rapport au piston.

**Revendications**

1. Dissipateur hydraulique d'énergie du type télescopique à plusieurs taux de freinage destiné au freinage des mouvements de lacet des bogies, comprenant:
– un cylindre de travail (1) rempli de liquide et partagé en deux chambres (3, 4) par un piston (2) muni de deux ensembles de clapets, chaque ensemble contrôlant le passage du fluide d'une chambre à une autre,
– une chambre annulaire de compensation (5) entourant ledit cylindre de travail et communiquant par un clapet (26) chargé par un ressort taré (27) avec la chambre de travail (4) opposée à la tige du piston,
– et un organe (14), fixé sur le fond du cylindre de travail, pénétrant à travers un alésage (16) prévu sur le fond du piston dans une chambre (15) prévue à l'intérieur de la tige du piston, caractérisé en ce que chaque ensemble de clapets comprend au moins un clapet (20, 35) fortement chargé par un ressort taré (21, 36) et un clapet (23, 37) faiblement chargé par un autre ressort taré (24, 38) et en ce que ledit organe (14) comprend des portions dont la section est, soit égale à celle de l'alésage, soit inférieure à celle de l'alésage, l'organe provoquant, suivant sa position par rapport au piston, l'obturation totale ou l'ouverture totale de l'alésage, le passage du fluide s'effectuant par un clapet fortement chargé (20, 35) quand le piston se déplace le long d'une portion de l'organe centrée sur la position d'équilibre du piston et dont la section est égale à celle de l'alésage, un taux de freinage élevé étant alors obtenu, ou par un clapet faiblement chargé (23, 37) quand le piston se déplace le long d'une portion de l'organe ayant une section inférieure à celle de l'alésage, un taux de freinage faible étant alors obtenu.

2. Dissipateur hydraulique d'énergie selon la revendication 1, caractérisé par le fait que l'organe (14) est constitué par une tige cylindrique (41) comprenant une portion centrale de section égale à celle de l'alésage (16) et, de part et d'autre de ladite portion centrale, des portions de section inférieure à l'alésage (16).

3. Dissipateur hydraulique d'énergie selon la revendication 1, caractérisé par le fait que l'organe (14) est constitué par une tige cylindrique (41) dont la section est égale à celle de l'alésage et comportent une portion centrale de section pleine et, de part et d'autre de cette portion centrale, des rainures (42) longitudinales à section constante.

4. Dissipateur hydraulique d'énergie selon la revendication 1, caractérisé par le fait que l'organe (14) est constitué par une tige polygonale (46) dont les diverses faces directement en contact avec les orifices (48) de sortie des clapets (49, 50, 51, 52) faiblement chargés comportent, sur des longueurs déterminées, des rainures (47) à section constante pour la mise en action des clapets correspondants.

5. Dissipateur hydraulique d'énergie selon l'une quelconque des revendications précédentes, caractérisé par le fait que les clapets les plus fortement chargés communiquent directement avec les chambres de travail (3) et (4).

**Patentansprüche**

1. Teleskopartiger hydraulischer Energiedämpfer mit mehreren Bremskraftstufen zum Bremsen der Schwingungen von Drehgestellen:
– mit einem mit Flüssigkeit gefüllten, durch einen Kolben (2) in zwei Kammern (3, 4) unterteilten Arbeitszylinder (1), welcher mit zwei Ventilsätzen ausgestattet ist, von denen jeder Satz den Flüssigkeitsdurchtritt von einer Kammer in die andere steuert;
– mit einer ringförmigen Kompensationskammer (5), welche den Arbeitszylinder umgibt und über ein mit einer tarierten Feder (27) belastetes Ventil (26) mit der der Kolbenstange abgewandten Arbeitskammer (4) in Verbindung steht;
– und mit einem Organ (14), welches am Boden des Arbeitszylinders befestigt ist und durch eine Bohrung (16) im Boden des Kolbens in eine Kammer (15) im Inneren der Kolbenstange eindringt, dadurch gekennzeichnet, dass jeder der Ventilsätze mindestens ein durch eine tarierte Feder (21, 36) stark belastetes Ventil (20, 35) und ein durch eine andere tarierte Feder (24, 38) schwach belastetes Ventil (23, 37) aufweist, und dass das Organ (14) Abschnitte besitzt, deren Querschnitt gleich gross oder kleiner ist als der der Bohrung, wobei das Organ je nach seiner Stellung in bezug auf den Kolben die Bohrung ganz verschliesst oder ganz freigibt, so dass die Flüssigkeit ihren Weg entweder über ein stark belastetes Ventil (20, 35) nimmt, wenn sich der Kolben entlang eines Organabschnitts bewegt, der auf die Gleichgewichtslage des Kolbens zentriert ist und einen Querschnitt gleich dem der Bohrung besitzt, womit also eine erhöhte Bremskraft erzielt wird, oder über ein schwach belastetes Ventil (23, 37), wenn sich der Kolben entlang eines Organabschnittes bewegt, der einen kleineren Querschnitt als den der Bohrung besitzt, womit also eine schwache Bremskraft erzielt wird.

2. Energiedämpfer nach Anspruch 1, dadurch gekennzeichnet, dass das Organ (14) aus einer zylindrischen Stange (41) besteht, die einen zentralen Abschnitt mit einem Querschnitt gleich dem der Bohrung (16), sowie, zu beiden Seiten des zentralen Abschnittes, Abschnitte mit kleinerem Querschnitt als dem der Bohrung (16) aufweist.

3. Energiedämpfer nach Anspruch 1, dadurch gekennzeichnet, dass das Organ (14) aus einer zylindrischen Stange (41) besteht, deren Querschnitt dem der Bohrung gleicht und die einen zentralen Abschnitt mit vollem Querschnitt aufweist, sowie, zu beiden Seiten dieses zentralen Abschnittes, Längsnuten (42) mit konstantem Querschnitt.

4. Energiedämpfer nach Anspruch 1, dadurch gekennzeichnet, dass das Organ (14) aus einer polygonalen Stange (46) besteht, deren verschiedene, in direktem Kontakt mit den Austrittsöffnungen (48) der schwach belasteten Ventile (49, 50, 51, 52) stehenden Seiten über festgelegte Längen Nuten (47) mit konstantem Querschnitt zur Betätigung der entsprechenden Ventile aufweisen.

5. Energiedämpfer nach einem der vorhergehenden Ansprüche, dadurch gekennzeichnet, dass die am stärksten belasteten Ventile direkt mit den Arbeitskammern (3) und (4) in Verbindung stehen.

## Claims

1. A hydraulic energy dissipator with multiple braking rates of the telescopic type, comprising:
- a working cylinder (1) filled with liquid and divided into two chambers (3, 4) by a piston (2) provided with two assemblies of valves each of which controlling the passage of the liquid from one chamber into the other,
- an annular compensating chamber (5) surrounding said working cylinder and communicating through a valve (26) charged by a calibrated spring (27) with the working chamber (4) opposite the piston rod,
- and a member (14) fixed at the bottom of the piston penetrating into a bore (16) of a chamber (15) provided inside the piston rod, characterized in that each assembly of valves comprises at least one valve (20, 35) strongly charged by a calibrated spring (21, 36) and one valve (23, 37) weakly charged by another calibrated spring (24, 38), and that said member (14) comprises portions, the cross-section of which is either equal to or less than that of the bore, so that, in accordance with its position relative to the piston, the member effectuates the total obturation or the total opening of the bore, so that the passage of the liquid takes place either through a strongly charged valve (20, 35) when the piston travels along a portion of the member centered about the position of equilibrium of the piston and the cross-section of which is equal to that of the bore, resulting in an elevated rate of braking, or through a weakly charged valve (23, 37) when the piston travels along a portion of the member having a cross-section less than that of the bore, resulting in a weak rate of braking.

2. A hydraulic energy dissipator according to claim 1, characterized in that the member (14) is constituted by a cylindrical rod (41) comprising a central portion of a cross-section equal to that of the bore (16) and, on both sides of said central portion, portions of cross-section less than that of the bore (16).

3. A hydraulic energy dissipator according to claim 1, characterized in that the member (14) is constituted by a cylindrical rod (41) the cross-section of which is equal to that of the bore and which comprises a central portion with plenum cross-section and on both sides of the central portion longitudinal grooves (42) with a constant cross-section.

4. A hydraulic energy dissipator according to claim 1, characterized in that the member (14) is constituted by a polygonal rod (46) whose various surfaces directly in contact with the outlet orifices (48) of the weakly loaded valves (49, 50, 51, 52), comprise, on pre-determined lengths, grooves (47) of constant cross-section for the activation of the corresponding valves.

5. A hydraulic energy dissipator according to any preceding claim, characterized in that the most loaded valves communicate directly with the working chambers (3) and (4).

FIG.1

FIG.3

FIG.4

FIG.5

FIG.2